# FASCICULE DE BREVET EUROPEEN

(11) **EP 1 259 424 B1**
(45) Date de publication et mention de la délivrance du brevet: **12.11.2003**
(21) Numéro de dépôt: 01911808.2
(22) Date de dépôt: 27.02.2001
(51) Int. Cl.: B64C 25/10

(54) **ATTERRISSEUR D'AERONEF A AXE DE PIVOTEMENT DE JAMBE FORTEMENT DEPORTE**
FLUGZEUGFAHRWERK MIT STARK VERSETZTER SCHWENKACHSE
AIRCRAFT LANDING GEAR WITH HIGHLY OFFSET STRUT PIVOT AXIS

(30) Priorité: 02.03.2000 FR 0002673
(43) Date de publication de la demande: 27.11.2002
(73) Titulaire: MESSIER-DOWTY S.A., F-78140 Velizy Villacoublay (FR)
(72) Inventeur: DERRIEN, Michel, F-78000 Versailles (FR); PARZY, Benjamin, F-92340 Bourg-La-Reine (FR)
(74) Mandataire: Jaunez, Xavier
(86) Numéro de dépôt international: FR0100562
(87) Numéro de publication internationale: WO01064511

(56) Documents cités:
- DE-A- 2 924 741
- GB-A- 1 490 088
- US-A- 1 914 092

## Description

La présente invention concerne un atterrisseur d'aéronef, du type comportant une jambe constituée par un caisson dans lequel coulisse une tige télescopique formant amortisseur, tige en extrémité libre de laquelle est articulé un balancier porteur d'un train de roues à plusieurs essieux.

L'invention s'intéresse plus particulièrement au cas des atterrisseurs dont le caisson de jambe est articulé en pouvant pivoter par une structure de liaison associée autour d'un axe sensiblement horizontal fortement déporté par rapport à l'axe de coulissement de la tige télescopique qui est vertical en position train bas.

Il est certes connu depuis longtemps de réaliser des structures d'atterrisseur dont l'axe de pivotement est non coplanaire avec l'axe de coulissement de la tige télescopique. Toutefois, dans les réalisations existantes, le déport était en général relativement faible, ce qui a toujours permis d'envisager la réalisation d'un caisson monobloc intégrant la partie fût dans laquelle coulisse la tige télescopique, et les appendices recevant les paliers d'articulation de l'atterrisseur sur l'aéronef, lesdits paliers matérialisant l'axe de pivotement de la jambe, ceci dans des conditions technologiques et économiques acceptable.

De telles structures sont par exemple illustrées dans le document DE-A-29 24741. Ce document décrit un atterrisseur de fuselage du type à relevage latéral, dans lequel le caisson est articulé sur le fuselage au moyen d'un axe horizontal s'étendant longitudinalement et présentant un déport avec l'axe de coulissement de la tige télescopique.

La réalisation d'aéronefs de plus en plus lourds conduit à envisager des atterrisseurs comportant un grand nombre de roues et/ou une pluralité d'atterrisseurs équipés de trains de roues. L'une des cinématiques de relevage envisagées pour ce genre d'atterrisseurs impose alors des structures dont l'axe de pivotement est fortement déporté par rapport à l'axe de coulissement de la tige télescopique, et pour lesquelles une réalisation monobloc du caisson devient technologiquement ou économiquement inenvisageables.

Ceci conduit à prévoir une structure de liaison associée réalisant la jonction mécanique entre le caisson proprement dit et les paliers d'axe de pivotement dudit caisson.

Il a déjà été proposé de réaliser cette structure de liaison sous forme intégrale ou encore sous forme d'un assemblage de plusieurs barres. Une telle réalisation ne convient pas pour des atterrisseurs dont le balancier comporte un grand nombre de roues, en raison de l'inaptitude de cette structure à transmettre efficacement l'important moment de torsion généré lors des manoeuvres de l'aéronef au sol, et en particulier des manoeuvres de virage.

Une structure en barres est ainsi illustrée dans le document US-A-1 914 092, qui décrit un atterrisseur de queue présentant un axe d'articulation sur le fuselage fortement déporté par rapport à un axe de pivotement de la roulette, conformément au préambule de la revendication 1. Le pivotement de la roulette interdit à celle-ci de transmettre un couple de torsion à la structure, de sorte qu'une réalisation en barres est ici bien adaptée. Il n'en serait plus de même si cette structure devait être soumise à la torsion.

En variante, il a été proposé de réaliser la structure de liaison précitée sous la forme de panneaux latéraux s'étendant chacun dans un plan qui est vertical en position train bas, les deux plans formant un dièdre ayant pour axe l'axe de coulissement de la tige télescopique. Là encore, cette structure ne convient pas dans le cas d'atterrisseurs dont le balancier comporte un grand nombre de roues, car elle est incapable de transmettre efficacement les moments de torsion élevés qui sont générés lors des manoeuvres en virage de l'aéronef au sol.

Une telle structure est illustrée par le document GB-A-1 490 088, qui concerne un atterrisseur à cinématique complexe, dont le caisson possède un axe d'articulation déporté par rapport à l'axe de coulissement de la tige télescopique. Pour lier les paliers d'articulation au corps du caisson, le caisson est pourvu de deux panneaux latéraux s'étendant dans un plan qui est vertical en position train bas, les deux plans formant un dièdre ayant pour axe l'axe de coulissement. Pour rendre cette structure apte à résister aux sollicitations venues du sol, les panneaux latéraux sont pourvus de bordures épaisses en vue d'empêcher la flexion des panneaux. Cette disposition est cependant lourde, et n'est pas adaptée à de gros atterrisseurs du type de ceux présentement envisagés.

La présente invention vise à concevoir une nouvelle structure d'atterrisseur spécialement adaptée au cas où les atterrisseurs présentent un axe de pivotement sensiblement horizontal ayant un déport important par rapport à l'axe de coulissement de la tige télescopique, ce dernier axe étant sensiblement vertical en position train bas.

L'invention a ainsi pour objet un atterrisseur incluant une structure de liaison apte à transmettre efficacement les moments de torsion qui sont générés lors des manoeuvres de l'aéronef au sol, et en particulier des manoeuvres de virage.

Ce problème est résolu conformément à l'invention, en ce que la structure de liaison est essentiellement constituée par deux panneaux reliant deux points axialement décalés du caisson à une structure d'axe commune s'étendant suivant l'axe de pivotement dudit caisson, de façon qu'en position train bas lesdits panneaux soient disposés à l'aplomb l'un de l'autre, avec un panneau supérieur relié au caisson par une attache haute qui est rigide en torsion, et un panneau inférieur relié au caisson par une attache basse qui est tolérante en torsion, de façon à autoriser un certain gauchissement du caisson lors des manoeuvres de virage de l'aéronef au sol.

Grâce aux modes d'attache précités, la tolérance en torsion procurée par l'attache basse du panneau inférieur au caisson permet un certain gauchissement du caisson lors des manoeuvres de virage de l'aéronef au sol sans nuire à la stabilité de la jambe, du fait que la structure de l'attache haute est quant à elle rigide en torsion.

De préférence, le panneau supérieur et le panneau inférieur s'étendent chacun dans un plan coplanaire à l'axe de pivotement du caisson, le plan du panneau supérieur étant sensiblement orthogonal à l'axe de coulissement de la tige télescopique.

Avantageusement, les panneaux supérieur et inférieur sont constitués par des pièces planes bordées par des raidisseurs.

L'attache haute du panneau supérieur au caisson, qui est rigide en torsion, peut être réalisée de plusieurs façons, et l'on peut citer une liaison d'encastrement, ou une liaison totalement rigide par soudure sur ou par réalisation monobloc avec ledit caisson, ou encore une liaison articulée sur un axe contenu dans le plan du panneau et parallèle à l'axe de pivotement dudit caisson.

L'attache basse du panneau inférieur au caisson, qui est quant à elle tolérante en torsion, peut être également réalisée de plusieurs façons : il peut s'agir par exemple d'une liaison articulée sur un axe contenu dans le plan du panneau inférieur et parallèle à l'axe de pivotement dudit caisson, ou d'une liaison rotule associée à un tourillon saillant solidaire du caisson, ou encore d'une liaison encastrée sur au moins un appendice saillant solidaire dudit caisson.

D'une façon générale, il sera avantageux de prévoir que les attaches haute et basse soient prévues au niveau des portées de coulissement de la tige télescopique dans le caisson dans la position enfoncée de celle-ci correspondant au support de l'aéronef au sol. Ainsi, les charges normales à l'axe du caisson, générées lors des manoeuvres de l'aéronef au sol, au niveau desdites portées sont contrées directement par les panneaux supérieur et inférieur, évitant ainsi une flexion indésirable du caisson.

La structure d'axe commune peut être une pièce séparée incluant les paliers de pivotement du caisson autour de son axe, ladite pièce séparée étant fixée aux panneaux supérieur et inférieur au niveau d'appendices solidaires de celle-ci et/ou desdits panneaux.

En variante, la structure d'axe commune est d'une pièce avec l'un des panneaux.

Selon encore une autre variante, la structure d'axe commune inclut une pièce de panneau fixée au panneau supérieur et/ou au panneau inférieur, ladite pièce de panneau étant coplanaire à et prolongeant le panneau associé.

D'autres caractéristiques et avantages de l'invention apparaîtront plus clairement à la lumière de la description qui va suivre et des dessins annexés, concernant des modes de réalisation particuliers, en référence aux figures où :
- la figure 1 illustre en perspective un atterrisseur d'aéronef, équipé conformément à l'invention d'une structure de liaison constituée par deux panneaux qui sont superposés en position train bas, en étant reliés à une structure d'axe commune s'étendant suivant l'axe de pivotement du caisson, lesdits panneaux étant symbolisés par des triangles hachurés,
- la figure 2 est une vue en élévation d'un caisson équipé d'une structure de liaison à deux panneaux superposés, selon un premier mode d'exécution des attaches de liaison haute et basse associées,
- la figure 3 est une vue en élévation d'une variante du caisson précédent, selon une représentation en vue avant,
- la figure 4 est une vue de dessus du caisson de la figure 3 équipée de sa structure de liaison, permettant de mieux distinguer le panneau supérieur de ladite structure et sa liaison à la structure d'axe commune,
- la figure 5 est une vue en élévation analogue à celle de la figure 2, dont deux arrachements permettent de distinguer les portées de coulissement de la tige télescopique dans la position enfoncée de celle-ci qui correspond au support de l'aéronef au sol,
- la figure 6 est une vue partielle de la structure de liaison, dans laquelle la structure d'axe commune est d'une pièce avec le panneau supérieur,
- la figure 7 est une vue en perspective illustrant une autre variante de l'attache haute qui est alors constituée par une liaison totalement rigide,
- la figure 8 illustre encore une autre variante de l'attache haute constituée par une liaison articulée,
- la figure 9 illustre à titre d'exemple divers modes d'exécution de l'attache basse, qui est constituée par une liaison articulée (a) et b)) ou une liaison rotule (c)),
- la figure 10 est une vue en élévation illustrant encore une autre variante de la structure de liaison associée au caisson, avec une structure d'axe commune constituée par une pièce séparée présentant des appendices pour la liaison aux panneaux supérieur et inférieur,
- la figure 11 est une coupe selon XI-XI de la figure 10 permettant de mieux distinguer l'agencement de l'attache basse,
- la figure 12 est une vue en perspective de dessous, illustrant une autre variante dans laquelle la structure d'axe commune inclut une pièce de panneau fixée au panneau inférieur,
- les figures 13 et 14 sont des vues de dessus schématiques permettant d'expliquer le comportement en virage de l'atterrisseur selon l'invention, et en particulier l'effet autodirectionnel procuré par la structure de liaison conforme à l'invention.

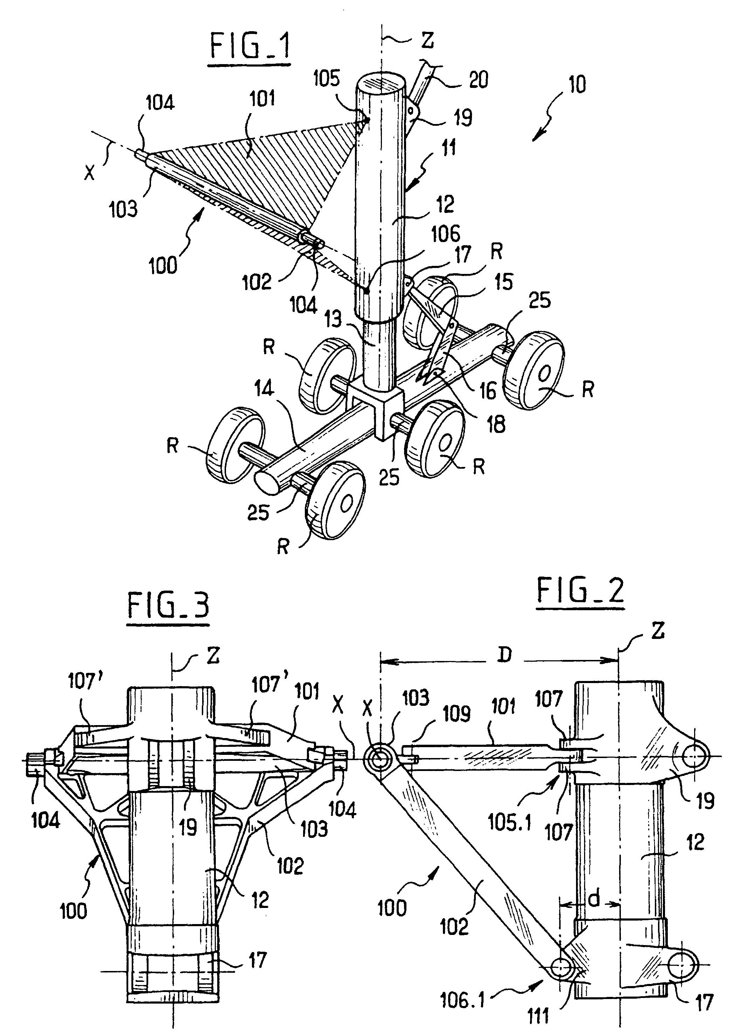

La figure 1 illustre un atterrisseur d'aéronef 10, comportant une jambe 11 constituée par un caisson cylindrique 12 d'axe Z dans lequel coulisse selon ledit axe une tige télescopique 13 formant amortisseur. En extrémité libre de cette tige télescopique 13, est articulé un balancier 14 porteur d'un train de roues à plusieurs essieux, ici trois essieux 25 de paires de roues R. On reconnaît également les deux branches 15, 16 d'un compas reliant le caisson 12 au balancier oscillant 14, lesdits bras 15, 16 étant accrochés sur des appendices associés 17, 18.

L'atterrisseur 10 est représenté ici en position train bas, c'est-à-dire la position dans laquelle l'axe Z est sensiblement vertical. Le caisson 12 est en outre articulé sur une structure d'aéronef non représentée ici, en pouvant pivoter par une structure de liaison associée autour d'un axe sensiblement horizontal noté X qui est fortement déporté par rapport à l'axe de coulissement Z de la tige télescopique 13. En position train bas, l'atterrisseur 10 est immobilisé en rotation autour de son axe X dans la position d'atterrissage par une contrefiche 20, dont on n'aperçoit ici que l'extrémité inférieure, qui est articulée sur un appendice supérieur 19 du caisson 12. Il est à noter que dans cet agencement, la contrefiche 20 ne travaille qu'en compression.

La caractéristique essentielle de l'atterrisseur 10 selon l'invention réside dans l'agencement particulier de la structure de liaison notée 100 reliant l'axe de pivotement X au fût du caisson 12 de la jambe. Conformément à cette caractéristique, la structure de liaison 100 est essentiellement constituée par deux panneaux 101, 102 reliant deux points axialement décalés 105, 106 du caisson 12. En position train bas, position représentée sur la figure 1, les panneaux 101, 102, ici symbolisés par des triangles hachurés, sont disposés à l'aplomb l'un de l'autre. On trouve alors un panneau supérieur noté 101, qui est relié au caisson 12 par une attache haute 105, et un panneau inférieur 102 relié au caisson 12 par une attache basse 106. Les deux panneaux 101, 102 relient les deux points 105, 106, c'est-à-dire les attaches associées, à une structure d'axe commune 103 qui s'étend suivant l'axe de pivotement X du caisson 12. Les paliers d'articulation agencés en extrémité de la structure d'axe commune 103 sont notés 104.

Conformément à un aspect essentiel de l'invention, l'attache haute 105 est rigide en torsion, tandis que l'attache basse 106 est tolérante en torsion, de façon à autoriser un certain gauchissement du caisson 12 lors des manoeuvre de virage de l'aéronef au sol. Cette possibilité de gauchissement du caisson 12 vis-à-vis de l'attache basse 106 permet d'optimiser la résistance et le comportement en déformation de l'atterrisseur sous les charges générées par la manoeuvre au sol de l'aéronef. En effet, la torsion générée par le glissement des roues R lors des manoeuvres en virage de l'aéronef au sol est transmise au bas du caisson 12 par les bras du compas 15, 16. Le caisson 12 présente une grande inertie de torsion selon son axe Z, et il transmet rigidement ce moment jusqu'à son extrémité supérieure, où ce moment de torsion est transmis dans le panneau supérieur 101 sous la forme d'un moment de flexion faisant travailler ce dernier idéalement dans son plan. Grâce à la tolérance en torsion de l'attache basse 106 du caisson 12, on laisse une certaine liberté au caisson de se déformer vis-à-vis de cette attache basse, le moment de torsion induisant un gauchissement du caisson autour de ladite attache. On obtient ainsi une reprise optimale des charges spécifiques générées lors de la manoeuvre de l'aéronef au sol, rendant la structure de l'atterrisseur parfaitement optimisée du point de vue de la résistance comme de son comportement en déformation.

En outre, le moment autour de l'axe de pivotement X généré par la part du poids de l'aéronef repris par l'atterrisseur 10 en raison du déport de la tige télescopique vis-à-vis de cet axe de pivotement X d'une part, et le cas échéant par la résultante parallèle au sol de l'effort de freinage de l'aéronef en raison de la hauteur de l'axe de pivotement par rapport au sol d'autre part, ce moment est contré par la contrefiche 20, qui travaille en permanence en compression, ce qui se révèle optimal pour sa stabilité et sa tenue en fatigue.

Il est avantageux de prévoir que le panneau supérieur 101 et le panneau inférieur 102 s'étendent chacun dans un plan coplanaire à l'axe de pivotement X du caisson 12, le plan du panneau supérieur 101 étant sensiblement orthogonal à l'axe de coulissement Z de la tige télescopique 13. La figure 1 illustre un tel agencement avantageux. D'une façon générale, les panneaux supérieur 101 et inférieur 102 seront de préférence constitués par des pièces planes bordées par des raidisseurs.

On va maintenant décrire divers modes d'exécution de la structure de liaison 100, et en particulier des attaches haute 105 et basse 106 assurant la liaison au caisson 12, en référence aux figures 2 à 12.

La figure 2 montre le caisson 12 sans sa tige télescopique, équipé de sa structure de liaison 100 constituée par le panneau supérieur 101, le panneau inférieur 102, et la structure d'axe commune 103. L'attache haute du panneau supérieur 101 au caisson 12 est constituée par une liaison d'encastrement 105.1 réalisée par deux paires d'appendices 107 superposés. L'attache basse 106 du panneau 102 au caisson 12 est quant à elle constituée par une liaison articulée 106.1 sur un axe qui est contenu dans le plan dudit panneau et parallèle à l'axe de pivotement X du caisson. Cette liaison articulée est mise en oeuvre par une bobine 111 solidaire de l'extrémité basse du caisson 12, qui est enjambée par une double chape d'extrémité inférieure du panneau 102. En partie haute du panneau 102, la liaison à la structure d'axe commune 103 est une liaison d'articulation coaxiale à l'axe X, tandis que la liaison entre la structure commune et le panneau supérieur 101 est réalisée au niveau d'un appendice 109 de ladite structure commune.

On a noté D la distance séparant les axes X et Z, distance qui correspond au fort déport entre ces axes, caractéristique des atterrisseurs d'aéronefs de très grandes dimensions. On a également noté d l'écart entre l'accrochage au niveau de la liaison basse 106.1 et l'axe Z, cette distance d étant choisie aussi faible que possible.

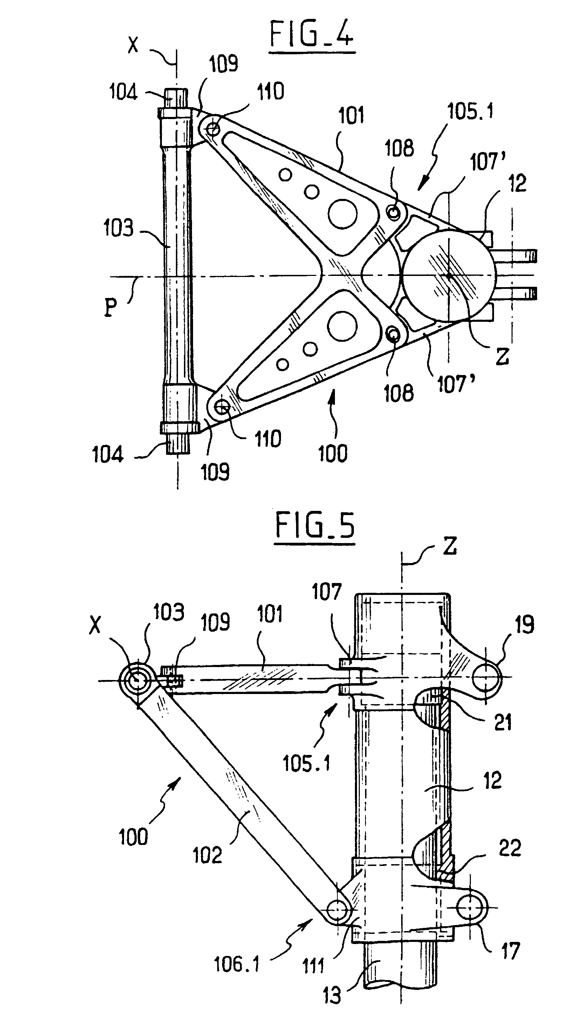

La figure 3 illustre une variante proche de celle de la figure 2, la différence résidant dans le mode d'encastrement de la liaison haute 105.1 entre le panneau supérieur 101 et le caisson 12 : on distingue en effet un montage sur deux appendices uniques 107' du caisson 12 qui sont coiffés par deux chapes associées du panneau 101. Ce mode d'exécution sera mieux compris en se référant à la vue de dessus de la figure 4, qui montre la structure du panneau supérieur 101, avec sa liaison en 108 sur les deux appendices latéraux 107', et en 110 aux appendices 109 solidaires de la structure d'axe commune 103. L'agencement de fixation est symétrique par rapport au plan P qui est le plan médian passant par l'axe Z de coulissement de la tige télescopique au regard de la transmission de la torsion, et les doigts de liaison 108 travaillent en cisaillement, ce qui correspond à un montage très favorable dit en double cisaillement.

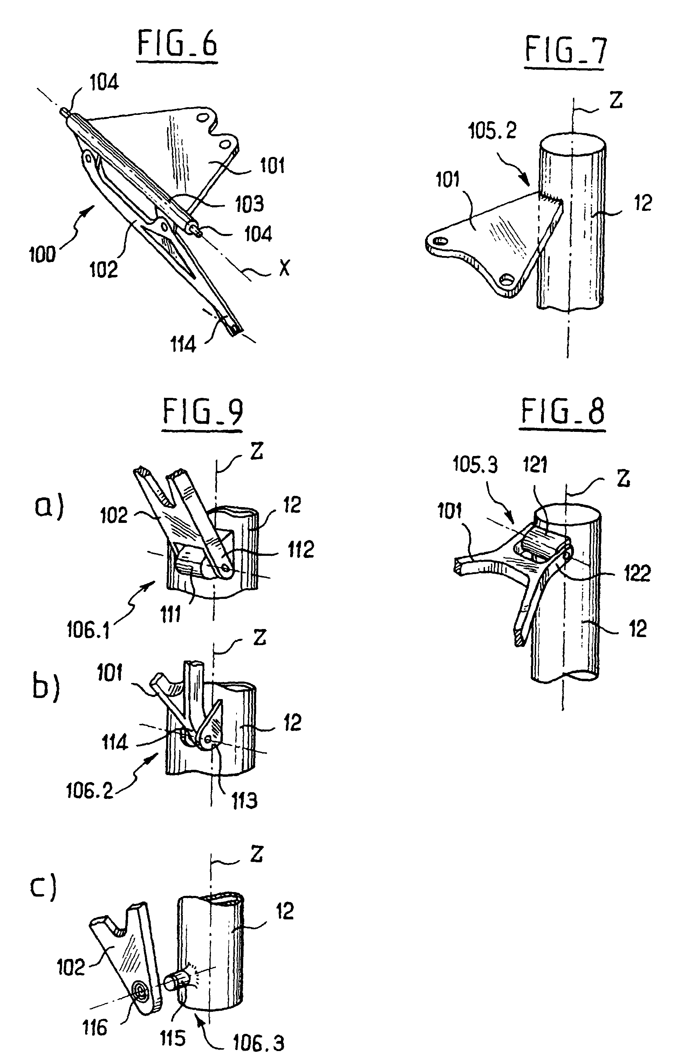

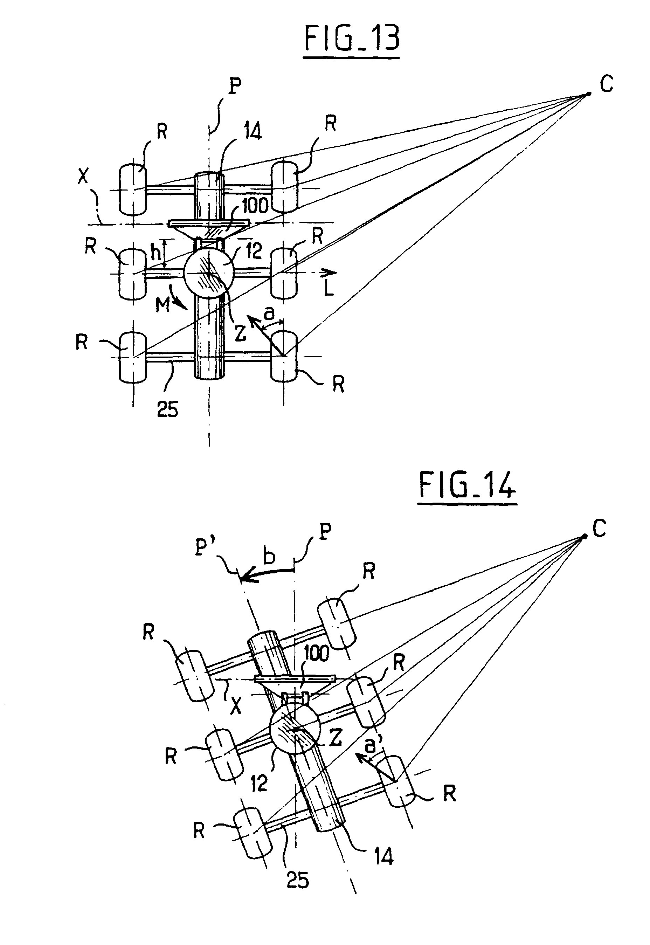

La figure 5 correspond à la figure 2, et présente deux arrachements du caisson 12 permettant de distinguer les portées de coulissement haute et basse 21, 22 de la tige télescopique 13 dans le caisson 12. La représentation de la figure 5 correspond à la position enfoncée de la tige télescopique 13, lorsque l'atterrisseur supporte l'aéronef au sol : on constate alors que les attaches haute 105 et basse 106 sont prévues au niveau de ces portées de coulissement 21, 22, dans cette position enfoncée. Ainsi, les charges normales à l'axe Z générées lors des manoeuvres de l'aéronef au sol au niveau de ces portées 21, 22 sont contrées directement par les panneaux 101, 102 de la structure de liaison 100, et évitent ainsi la flexion du caisson 12. Ces charges aux portées de la tige coulissante 13 se décomposent alors en charges dans le plan des panneaux supérieur 101 et inférieur 102, qu'ils sont à même de transmettre efficacement à l'aéronef par l'intermédiaire des axes d'articulation. Le caisson 12 ne subit ainsi aucune flexion sous les sollicitations résultant des efforts générés lors de la manoeuvre en virage de l'aéronef au sol, grâce à l'agencement des attaches haute et basse au niveau des portées de la tige télescopique 13. Le déport d de l'attache basse 106 du panneau inférieur 102 à la partie inférieure du caisson a pour effet de générer, sous un effort latéral de virage, un moment de torsion de caisson autour de ladite attache. Comme on a laissé une certaine liberté au caisson de se déformer par rapport à cette attache basse, le moment de torsion induit un gauchissement du caisson autour de cette attache basse. Ce déplacement de gauchissement est communiqué au balancier de l'atterrisseur par les bras du compas, ce qui a pour effet de faire pivoter le balancier dans un sens qui est favorable au rapprochement du centre instantané de rotation de l'aéronef, améliorant ainsi la capacité de virage de celui-ci : on obtient ainsi un effet autodirectionnel très avantageux sur lequel il sera revenu plus loin en référence aux figures 13 et 14.

Dans les variantes précédentes, la structure d'axe commune 103 est une pièce séparée incluant les paliers 104 de pivotement du caisson 12 autour de son axe X, ladite pièce séparée étant fixée aux panneaux supérieur 101 et inférieur 102 au niveau d'appendices solidaires de celle-ci ou desdits panneaux. La figure 6 illustre une variante dans laquelle la structure d'axe commune 103 est d'une pièce avec l'un des panneaux de la structure de liaison 100, en l'espèce le panneau supérieur 101.

La figure 7 illustre une autre variante de l'attache haute 105 du panneau supérieur 101 au caisson 12. Cette attache haute est constituée par une liaison totalement rigide 105.2 qui peut être réalisée par soudure sur le caisson 12, ou en monobloc avec ledit caisson par suite d'une réalisation en pièce unique.

Sur la figure 8, l'attache haute du panneau supérieur 101 au caisson 12 est constituée par une liaison 105.3 articulée sur un axe contenu dans le plan dudit panneau supérieur 101 et parallèle à l'axe de pivotement X dudit caisson. Le panneau supérieur 101 se termine par une double chape 122 enserrant une protubérance ou bobine 121 solidaire du caisson 12, sur laquelle ledit panneau est articulé.

La figure 9 illustre divers modes d'exécution envisageables pour l'attache basse 106 reliant le panneau inférieur 102 de la structure de liaison 100 au caisson 12.

En a), l'attache basse du panneau inférieur 102 au caisson 12 est constituée par une liaison 106.1 articulée sur un axe contenu dans ledit panneau et parallèle à l'axe de pivotement X du caisson. Il s'agit alors d'une articulation par une double chape 112 en extrémité inférieure du panneau inférieur 102, articulée sur une bobine 111 solidaire du caisson 12. En b), la liaison articulée 106.2 est réalisée par une simple chape 114 en extrémité inférieure du panneau inférieur 102, passant entre deux appendices associés 113 du caisson 12. En c), l'attache basse du panneau inférieur 102 au caisson 12 est constituée par une liaison rotule 106.3, avec une rotule 116 encastrée dans l'extrémité inférieure du panneau inférieur 102, qui est montée sur un tourillon saillant 115 solidaire du caisson 12.

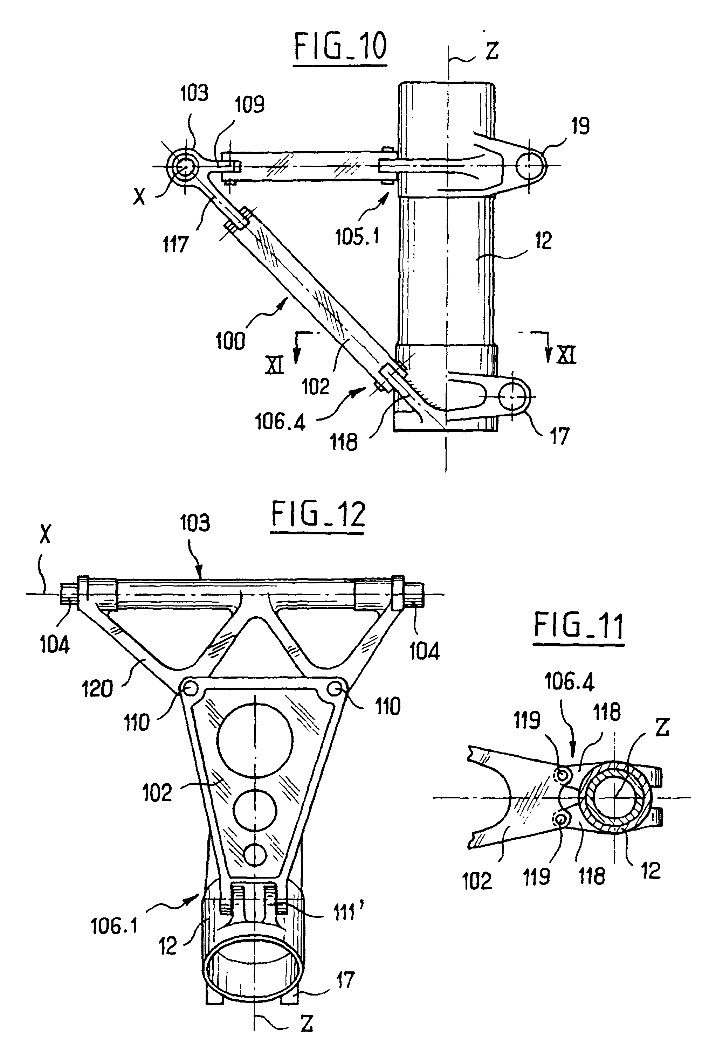

La figure 10 illustre une autre variante dans laquelle la structure d'axe commune 103 est une pièce séparée présentant des appendices 109 et 117 pour la liaison aux panneaux supérieur 101 et inférieur 102. L'attache haute 105.1 correspond à celle déjà décrite en regard des figures 2 et 3. L'attache basse du panneau inférieur 102 au caisson 12 est quant à elle constituée par une liaison encastrée 106.4 sur au moins un appendice saillant 118, ici deux tels appendices, solidaires du caisson 12, les doigts de fixation étant notés 119. La zone de l'attache basse 106.4 est également illustrée sur la coupe de la figure 11 qui permet une meilleure compréhension de la structure. Les appendices 118 seront de structure légère pour préserver la tolérance en torsion de l'attache basse.

Sur la figure 12, on constate que la structure d'axe commune 103 inclut une pièce de panneau 120 fixée au panneau inférieur 102, ladite pièce de panneau étant coplanaire à et prolongeant le panneau inférieur 102. L'attache basse 106.1 est articulée sur des appendices 111' du caisson 12.

Les figures 13 et 14 sont des vues de dessus destinées à illustrer le comportement de l'atterrisseur d'aéronef selon l'invention lors d'une manoeuvre de virage de l'aéronef au sol, le centre instantané de rotation étant un point noté C.

Lors d'une manoeuvre en virage, la résultante des efforts générés au niveau de chaque roue R par leur glissement, résultant du fait que leur plan moyen n'est pas parallèle à la tangente de leur trajectoire propre lors de la rotation de l'aéronef autour du centre instantané de rotation C (ce plan fait un angle noté a avec la tangente à la trajectoire, ainsi que ceci est illustré pour la roue arrière droite de l'atterrisseur), peut se globaliser par un effort latéral noté L appliqué au niveau de l'axe Z du caisson et de la tige coulissante associée, et l'attache basse du panneau inférieur de la structure de liaison 100 a pour effet que l'effort latéral crée un moment de gauchissement de valeur M = h.L. Ce moment amène le caisson à se déformer en torsion d'un angle b comme cela est illustré sur la figure 14. Le caisson 12 entraîne alors le balancier 14 dans son mouvement au moyen des bras du compas, de sorte que le balancier se déplace d'une façon qui réduit les angles de glissement a, et donc l'usure des pneus, ainsi que les efforts sollicitant la structure de l'atterrisseur. Ceci induit un rapprochement du centre instantané de rotation C, diminuant ainsi le rayon de virage, et augmentant par là même la capacité de virage de l'aéronef. L'angle a devient un angle a' = a - b. la figure 13 illustre en fait la situation d'un atterrisseur qui serait parfaitement rigide en torsion, l'angle a restant alors constant dans toute la trajectoire en virage. Au contraire, la figure 14 illustre le comportement résultant de la tolérance en torsion de l'attache basse, avec un gauchissement du caisson produisant une rotation d'angle b, avec ainsi un atterrisseur capable de se déformer sous l'effort de virage, et susceptible de profiter de l'effet autodirectionnel précité.

L'invention n'est pas limitée aux modes de réalisation qui viennent d'être décrits, mais englobe au contraire toute variante dans l'étendue de la protection, comme définie par les revendications.

## Revendications

1. Atterrisseur d'aéronef, du type comportant une jambe (11) constituée par un caisson (12) dans lequel coulisse selon un axe (Z) une tige télescopique (13) formant amortisseur, tige en extrémité libre de laquelle est articulé un balancier (14) porteur d'un train de roues à plusieurs essieux, l'axe de coulissement (Z) de la tige télescopique (13) étant vertical en position train bas, ledit caisson (12) pouvant être articulé sur une structure d'aéronef en pouvant pivoter par une structure de liaison (100) associée autour d'un axe sensiblement horizontal (X) fortement déporté par rapport à l'axe des coulissement (Z), **caractérisé en ce que** la structure de liaison (100) est essentiellement constituée par deux panneaux (101, 102) reliant deux points axialement décalés du caisson (12) à une structure d'axe commune (103) s'étendant suivant l'axe de pivotement (X) dudit caisson, de façon qu'en position train bas lesdits panneaux soient disposés à l'aplomb l'un de l'autre, avec un panneau supérieur (101) relié au caisson (12) par une attache haute (105) qui est rigide en torsion, et un panneau inférieur (102) relié au caisson (12) par une attache basse (106) qui est tolérante en torsion, de façon à autoriser un certain gauchissement du caisson (12) lors des manoeuvres de virage de l'aéronef au sol.

2. Atterrisseur selon la revendication 1, **caractérisé en ce que** le panneau supérieur (101) et le panneau inférieur (102) s'étendent chacun dans un plan coplanaire à l'axe de pivotement (X) du caisson (12), le plan du panneau supérieur (101) étant sensiblement orthogonal à l'axe de coulissement (Z) de la tige télescopique (13).

3. Atterrisseur selon la revendication 1 ou la revendication 2, **caractérisé en ce que** les panneaux supérieur (101) et inférieur (102) sont constitués par des pièces planes bordées par des raidisseurs.

4. Atterrisseur selon l'une des revendications 1 à 3, **caractérisé en ce que** l'attache haute (105) du panneau supérieur (101) au caisson (12) est constituée par une liaison d'encastrement (105.1).

5. Atterrisseur selon l'une des revendications 1 à 3, **caractérisé en ce que** l'attache haute (105) du panneau supérieur (101) au caisson (12) est constituée par une liaison totalement rigide (105.2) par soudure sur ou par réalisation monobloc avec ledit caisson.

6. Atterrisseur selon l'une des revendications 1 à 3, **caractérisé en ce que** l'attache haute (105) du panneau supérieur (101) au caisson (12) est constituée par une liaison (105.3) articulée sur un axe contenu dans le plan dudit panneau et parallèle à l'axe de pivotement (X) dudit caisson.

7. Atterrisseur selon l'une quelconque des revendications 1 à 6, **caractérisé en ce que** l'attache basse (106) du panneau inférieur (102) au caisson (12) est constituée par une liaison (106.1, 106.2) articulée sur un axe contenu dans le plan dudit panneau et parallèle à l'axe de pivotement (X) dudit caisson.

8. Atterrisseur selon l'une quelconque des revendications 1 à 6, **caractérisé en ce que** l'attache basse (106) du panneau inférieur (102) au caisson (12) est constituée par une liaison rotule (106.3) associée à un tourillon saillant (115) solidaire dudit caisson.

9. Atterrisseur selon l'une quelconque des revendications 1 à 6, **caractérisé en ce que** l'attache basse (106) du panneau inférieur (102) au caisson (12) est constituée par une liaison encastrée (106.4) sur au moins un appendice saillant (118) solidaire dudit caisson.

10. Atterrisseur selon l'une quelconque des revendications 1 à 9, **caractérisé en ce que** les attaches haute (105) et basse (106) sont prévues au niveau des portées de coulissement (21, 22) de la tige télescopique (13) dans le caisson (12) dans la position enfoncée de celle-ci correspondant au support de l'aéronef au sol.

11. Atterrisseur selon l'une des revendications 1 à 10, **caractérisé en ce que** la structure d'axe commune (103) est une pièce séparée incluant les paliers (104) de pivotement du caisson (12) autour de son axe (X), ladite pièce séparée étant fixée aux panneaux supérieur (101) et inférieur (102) au niveau d'appendices solidaires de celle-ci et/ou desdits panneaux.

12. Atterrisseur selon l'une des revendications 1 à 10, **caractérisé en ce que** la structure d'axe commune (103) est d'une pièce avec l'un (101) des panneaux (101, 102).

13. Atterrisseur selon l'une quelconque des revendications 1 à 10, **caractérisé en ce que** la structure d'axe commune (103) inclut une pièce de panneau (120) fixée au panneau supérieur (101) et/ou au panneau inférieur (102), ladite pièce de panneau étant coplanaire à et prolongeant le panneau associé.

## Patentansprüche

1. Luftfahrzeug-Fahrgestell, umfassend ein Federbein (11), das von einem Rohr (12) gebildet ist, in dem entlang einer Achse (Z) eine Teleskopstange (13) gleitend angeordnet ist, die ein Dämpfungselement bildet, wobei an dem freien Ende der Stange ein Radträger (14) angelenkt ist, der ein mehrachsiges Fahrwerk trägt, und wobei die Gleitachse (Z) der Teleskopstange (13) bei einer gesenkten Position des Fahrwerks vertikal verläuft und das Rohr (12) derart an einer Luftfahrzeugstruktur angelenkt sein kann, daß es über eine zugehörige Verbindungsstruktur (100) um eine im wesentlichen horizontale Achse (X) schwenken kann, die stark versetzt ist zur Gleitachse (Z), **dadurch gekennzeichnet, daß** die Verbindungsstruktur (100) im wesentlichen von zwei Platten (101, 102) gebildet wird, die zwei axial voneinander beabstandete Punkte des Rohrs (12) mit einer Struktur (103) einer gemeinsamen Achse verbinden, die sich entlang der Schwenkachse (X) des Rohrs derart erstreckt, daß die Platten bei gesenkter Position übereinander angeordnet sind, wobei eine obere Platte (101) über ein oberes torsionsstarres Befestigungselement (105), mit dem Rohr (12) verbunden ist und eine untere Platte (102) über ein unteres torsionstolerantes Befestigungselement (106) mit dem Rohr (12) verbunden ist, so daß bei einer Kurvenbewegung des Luftfahrzeugs auf dem Boden eine gewisse Schrägstellung des Rohrs (12) ermöglicht wird.

2. Fahrgestell nach Anspruch 1, **dadurch gekennzeichnet, daß** sich die obere Platte (101) und die untere Platte (102) jeweils in einer mit der Schwenkachse (X) des Rohrs (12) koplanaren Ebene erstrecken, wobei die Ebene der oberen Platte (101) im wesentlichen im rechten Winkel zur Gleitachse (Z) der Teleskopstange (13) verläuft.

3. Fahrgestell nach Anspruch 1 oder 2, **dadurch gekennzeichnet, daß** die obere Platte (101) und die untere Platte (102) aus ebenen Elementen mit versteiftem Rand gebildet sind.

4. Fahrgestell nach einem der Ansprüche 1 bis 3, **dadurch gekennzeichnet, daß** das obere Befestigungselement (105) für die Befestigung der oberen Platte (101) an dem Rohr (12) aus einer Einpaßverbindung (105.1) besteht.

5. Fahrgestell nach einem der Ansprüche 1 bis 3, **dadurch gekennzeichnet, daß** das obere Befestigungselement (105) für die Befestigung der oberen Platte (101) an dem Rohr (12) aus einer vollkommen starren Verbindung (105.2) besteht, die durch Verschweißen oder einstückiges Ausbilden mit dem Rohr erzielt wird.

6. Fahrgestell nach einem der Ansprüche 1 bis 3, **dadurch gekennzeichnet, daß** das obere Befestigungselement (105) für die Befestigung der oberen Platte (101) an dem Rohr (12) aus einer Gelenkverbindung (105.3) mit einer in der Ebene der Platte enthaltenen und parallel zur Schwenkachse (X) des Rohrs verlaufenden Achse besteht.

7. Fahrgestell nach einem der Ansprüche 1 bis 6, **dadurch gekennzeichnet, daß** das untere Befestigungselement (106) der unteren Platte (102) für die Verbindung mit dem Rohr (12) aus einer Gelenkverbindung (106.1, 106.2) mit einer in der Ebene der Platte enthaltenen und parallel zur Schwenkachse (X) des Rohrs verlaufenden Achse besteht.

8. Fahrgestell nach einem der Ansprüche 1 bis 6, **dadurch gekennzeichnet, daß** das untere Befestigungselement (106) der unteren Platte (102) für die Verbindung mit dem Rohr (12) aus einer Zapfengelenkverbindung (106.3) mit einem hervorstehenden und einstückig mit dem Rohr ausgebildeten Zapfen (115) besteht.

9. Fahrgestell nach einem der Ansprüche 1 bis 6, **dadurch gekennzeichnet, daß** das untere Befestigungselement (106) der unteren Platte (102) für die Verbindung mit dem Rohr (12) aus einer Einpaßverbindung (106.4) an zumindest einem mit dem Rohr einstückig ausgebildeten hervorstehenden Fortsatz (118) besteht.

10. Fahrgestell nach einem der Ansprüche 1 bis 9, **dadurch gekennzeichnet, daß** das obere und das untere Befestigungselement (105, 106) im Bereich der Gleitlänge (21, 22) der Teleskopstange (13) in dem Rohr (12) in der eingefahrenen Position der Teleskopstange vorgesehen sind, wobei diese Position einem Abstützen des Luftfahrzeugs auf dem Boden entspricht.

11. Fahrgestell nach einem der Ansprüche 1 bis 10, **dadurch gekennzeichnet, daß** die Struktur (103) der gemeinsamen Achse ein separates Element ist, das die Schwenklager (104) des Rohrs (12) um seine Achse (X) umfaßt, wobei das separate Element mit der oberen und der unteren Platte (101, 102) im Bereich von einstückig mit ihm und/oder den Platten ausgebildeten Fortsätzen verbunden ist.

12. Fahrgestell nach einem der Ansprüche 1 bis 10, **dadurch gekennzeichnet, daß** die Struktur (103) der gemeinsamen Achse einstückig mit einer (101) der Platten (101, 102) ausgebildet ist.

13. Fahrgestell nach einem der Ansprüche 1 bis 10, **dadurch gekennzeichnet, daß** die Struktur (103) der gemeinsamen Achse ein Plattenstück (120) einschließt, das an der oberen Platte (101) und/oder der unteren Platte (102) befestigt ist, wobei das Plattenstück mit der jeweiligen Platte koplanar ist und diese verlängert.

## Claims

1. Aircraft landing gear of the type comprising a leg (11) constituted by a strut (12) in which a telescopic shock-absorber rod (13) slides along a sliding axis (Z), the free end of the rod being hinged to a rocker beam (14) carrying a wheel set having multiple axles, the sliding axis (Z) of the telescopic rod (13) being vertical in the gear-down position, said strut (12) being capable of being hinged to a structure of the aircraft and being capable of being pivoted by an associated connection structure (100) about a substantially horizontal axis (X) that is highly offset from the sliding axis (Z), the landing gear being **characterized in that** the connection structure (100) is essentially constituted by two panels (101, 102) connecting two axially separated points of the strut (12) to a common axis structure (103) extending along the pivot axis (X) of said strut, in such a manner that in the gear-down position said panels are disposed one above the other, with a top panel (101) which is connected to the strut (12) via a high attachment (105) which is rigid in twisting, and with a bottom panel (102) which is connected to the strut (12) via a low attachment (106) which tolerates twisting, thereby allowing the strut (12) to warp to some extent when the aircraft is turning while taxiing.

2. Landing gear according to claim 1, **characterized in that** the top panel (101) and the bottom panel (102) both extend in respective planes each containing the pivot axis (X) of the strut (12), the plane of the top panel (101) being substantially orthogonal to the sliding axis (Z) of the telescopic rod (13).

3. Landing gear according to claim 1 or claim 2, **characterized in that** the top and bottom panels (101, 102) are constituted by plane pieces with stiffened margins.

4. Landing gear according to any one of claims 1 to 3, **characterized in that** the high attachment (105) between the top panel (101) and the strut (12) is constituted by a fixed connection (105.1).

5. Landing gear according to any one of claims 1 to 3, **characterized in that** the high attachment (105) between the top panel (101) and the strut (12) is constituted by a totally rigid connection (105.2) achieved by welding to or by being formed integrally with said strut.

6. Landing gear according to any one of claims 1 to 3, **characterized in that** the high attachment (105) between the top panel (101) and the strut (12) is constituted by a connection (105.3) that is hinged about an axis contained in the plane of said panel and extending parallel to the pivot axis (x) of said strut.

7. Landing gear according to any one of claims 1 to 6, **characterized in that** the low attachment (106) between the bottom panel (102) and the strut (12) is constituted by a connection (106.1, 106.2) that is hinged about an axis contained in the plane of said panel and extending parallel to the pivot axis (X) of said strut.

8. Landing gear according to any one of claims 1 to 6, **characterized in that** the low attachment (106) between the bottom panel (102) and the strut (12) is constituted by a swivel connection (106.3) associated with a stub axle (115) projecting from said strut.

9. Landing gear according to any one of claims 1 to 6, **characterized in that** the low attachment (106) between the bottom panel (102) and the strut (12) is constituted by a restrained connection (106.4) to at least one lug (118) projecting from said strut.

10. Landing gear according to any one of claims 1 to 9, **characterized in that** the high and low attachments (105, 106) are provided level with sliding bearing surfaces (21, 22) for the telescopic rod (13) in the strut (12) when the rod is in its pushed-in position corresponding to supporting the aircraft on the ground.

11. Landing gear according to any one of claims 1 to 10, **characterized in that** the common axis structure (103) is a separate part including the pivot bearings (104) enabling the strut (12) to pivot about its pivot axis (X), said separate part being fixed to the top and bottom panels (101, 102) via lugs that are secured thereto and/or to said panels.

12. Landing gear according to any one of claims 1 to 10, **characterized in that** the common axis structure (103) is integral with one of the panels (101).

13. Landing gear according to any one of claims 1 to 10, **characterized in that** the common axis structure (103) includes a panel portion (120) that is fixed to the top panel (101) and/or to the bottom panel (102), said panel portion being coplanar with and extending the associated panel.
